# EUROPÄISCHE PATENTANMELDUNG

(11) **EP 0 911 598 A2**
(43) Veröffentlichungstag der Anmeldung: **28.04.1999**
(21) Anmeldenummer: 98117500.3
(22) Anmeldetag: 15.09.1998
(51) Int. Cl.: F28F 27/02, H01M 8/06, B01D 1/16

(54) **Vorrichtung zum Verdampfen und Überhitzen eines flüssigen Reaktant-Massenstroms**

(30) Priorität: 24.10.1997 DE 19747034
(71) Anmelder: DBB Fuel Cell Engines GmbH, 73230 Kirchheim/Teck-Nabern (DE)
(72) Erfinder: Autenrieth, Rainer, 89155 Erbach (DE)
(74) Vertreter: Kocher, Klaus-Peter Dipl.-Phys

(57) **Zusammenfassung**

Vorrichtung (10) zum Verdampfen und Überhitzen eines flüssigen Reaktant-Massenstroms mit einem in einem Gehäuse (12) angeordneten einzelnen Wärmetauscher (14) als Verdampfungs- und Überhitzungseinheit, mindestens einer Einrichtung (18) zum feinverteilten Einsprühen des Reaktant-Massenstroms und einem Gasauslaß (22) für überhitztes Gas. Der zu verdampfende und zu überhitzende flüssige Reaktant-Massenstrom wird feinverteilt in das Gehäuse (12) eingesprüht, in bzw. an der Verdampfungs- und Überhitzungseinheit verdampft und überhitzt und über den dazu vorgesehenen Gasauslaß (22) abgeführt. Die erfindungsgemäße Vorrichtung (10) verfügt aufgründ des feinen Einsprühens des flüssigen Reaktant-Massenstroms über eine hohe Dynamik und eignet sich zusätzlich auch zur Verwendung als Gaserhitzer.

## Beschreibung

Die vorliegende Erfindung betrifft eine Vorrichtung zum Verdampfen und Überhitzen eines flüssigen Reaktant-Massenstroms.

In Gaserzeugungssystemen für mobile Anwendungen, beispielsweise in Verbindung mit Brennstoffzellen für Kraftfahrzeuge, werden üblicherweise zweistufige Verdampfereinheiten verwendet. Eine derartige zweistufige Verdampfereinheit ist aus der DE 44 26 692 C1 bekannt und besteht aus abwechselnd übereinander gestapelten Folien mit Wärmeträgerkanälen bzw. mit Reaktionskanälen. Die Anforderungen an ein Gaserzeugungssystem für mobile Anwendungen ist neben einem kleinen Bauvolumen insbesondere eine hohe Dynamik. Aus diesem Grunde werden als Verdampfer Wärmetauscher mit sehr kleinen Strömungsquerschnitten verwendet, um die durch eine unterschiedliche Flüssigkeitsfüllhohe bedingten Volumenänderungen zwischen Teillast und Vollast zu minimieren. Derartige feine Strukturen sind zwar vorteilhaft für die Dynamik des Gaserzeugungssystems, führen jedoch in der Dampfphase zu hoher Gasgeschwindigkeit und somit einem hohen Druckabfall. Aus diesem Grunde wird dem Verdampfer ein Überhitzer nachgeschaltet, der über zum Überhitzen geeignete größere Strömungsquerschnitte verfügt. Des weiteren erfordert die Verwendung eines derartigen bekannten Gaserzeugungssystems einen hochreinen Brennstoff, da es bedingt durch den vorstehend beschriebenen Aufbau mit sehr kleinen Strömungsquerschnitten bei Verunreinigungen im Brennstoff leicht zu Verstopfungen der Strömungskanäle und somit zu einem Ausfall des Systems kommen kann.

Ausgehend hiervon liegt der Erfindung die Aufgabe zugrunde, eine möglichst kompakte Vorrichtung zum Verdampfen und Überhitzen eines flüssigen Reaktant-Massenstroms bereitzustellen, bei der die vorstehend geschilderten Nachteile nicht mehr auftreten.

Zur Lösung dieser Aufgabe wird eine Vorrichtung zum Verdampfen und Überhitzen eines flüssigen Reaktant-Massenstroms mit den Merkmalen des Anspruches 1 bereitgestellt. Demnach wird erfindungsgemäß in nur einem Gehäuse ein einzelner Wärmetauscher als Verdampfungs- und Überhitzungseinheit vorgesehen. Der flüssige Reaktant-Massenstrom wird feinverteilt in das Gehäuse eingesprüht und in bzw. an der Verdampfungs- und Überhitzungseinheit verdampft und überhitzt. Das derart erzeugte überhitzte Gas wird über einen dazu vorgesehenen Gasauslaß abgeführt. Erfindungsgemäß wird somit ein einstufiges Gaserzeugungssystem zum Erzeugen eines überhitzten Gases bereitgestellt, das keine bloße Kombination eines Verdampfers und eines Überhitzers darstellt, sondern mit nur einem Wärmetauscher sowohl eine verbesserte Verdampfungsfunktion als auch eine verbesserte Überhitzerfunktion wahrnimmt. Da erfindungsgemäß in dem Gehäuse und insbesondere im Bereich des Wärmetauschers aufgrund des feinen Einsprühens des flüssigen Reaktant-Massenstroms keine Flüssigkeitsansammlung vorliegt, arbeitet die erfindungsgemäße Vorrichtung mit einer sehr hohen Dynamik. Da zur Durchführung des Verdampfungs- und Überhitzungsprozesses ein an sich bekannter Wärmetauscher ausreichend ist, dessen Strömungsquerschnitte nicht allzu klein sind, ist die vorstehend beschriebene Verstopfung aufgrund von Verunreinigungen nicht mehr möglich.

In Ausgestaltung der Erfindung ist die Einrichtung zum feinverteilten Einsprühen als in die Verteilerzone ragende Lanze ausgebildet. Die Lanze verfügt vorteilhafterweise über mehrere Austrittslöcher. Die erfindungsgemäße Ausgestaltung gewährleistet, daS der Reaktant-Massenstrom über die in das Innere des Gehäuses ragende Lanze über einen relativ großen Bereich des Gehäuses feinverteilt eingesprüht wird, wodurch eine besonders gute Dynamik der erfindungsgemäßen Vorrichtung erzielt wird.

In vorteilhafter Ausgestaltung der Erfindung ist die mindestens eine Einrichtung zum feinverteilten Einsprühen in einem in dem Gehäuse ausgebildeten Verteilerraum angeordnet. Durch diese Maßnahme wird eine besonders gute und gleichmäßige Verteilung des zu verdampfenden und zu überhitzenden Reaktanten erzielt.

In weiterer vorteilhafter Ausgestaltung der Erfindung ist ein Gaseinlaß für zu überhitzendes Gas vorgesehen. Erfindungsgemäß ist nicht nur das Verdampfen und Überhitzen eines flüssigen Reaktant-Massenstromes möglich, sondern auch das bloße Überhitzen eines gasförmigen Reaktanten, so daß der erfindungsgemäßen Vorrichtung eine Zusatzfunktion zukommt.

In besonders vorteilhafter Ausgestaltung der Erfindung ist die Einrichtung zum feinverteilten Einsprühen des Reaktant-Massenstromes in dem Gaseinlaß integriert, wodurch sich eine besonders kompakte Bauweise der erfindungsgemäßen Vorrichtung erzielen läßt. Vorzugsweise ist dabei der Strömungsdurchmesser der Einrichtung zum feinverteilten Einsprühen kleiner als der Strömungsdurchmesser des Gas-Einlasses.

Vorteilhafterweise handelt es sich bei dem als Verdampfungs- und Überhitzungseinheit vorgesehenen Wärmetauscher um einen Plattenwärmetauscher, bei dem Gaszufuhr und -abfuhr vorzugsweise durch jeweils an den Plattenenden vorgesehene Strömungskanäle erfolgt.

Die Erfindung ist anhand von Ausführungsbeispielen in der Zeichnung schematisch dargestellt und wird im folgenden unter Bezugnahme auf die Zeichnung näher erläutert.
Figur 1 zeigt eine seitliche Schnittdarstellung eines ersten Ausführungsbeispieles einer erfindungsgemäßen Vorrichtung zum Verdampfen und Überhitzen eines flüssigen Reaktant-Massenstroms.
Figur 2 zeigt die Vorrichtung der Figur 1 in Draufsicht gemäß Blickrichtungs-Pfeil II.
Figur 3 zeigt eine Gehäuseplatte eines zweiten Ausführungsbeispieles einer erfindungsgemäßen Vorrichtung zum Verdampfen und Überhitzen eines flüssigen Reaktant-Massenstroms.

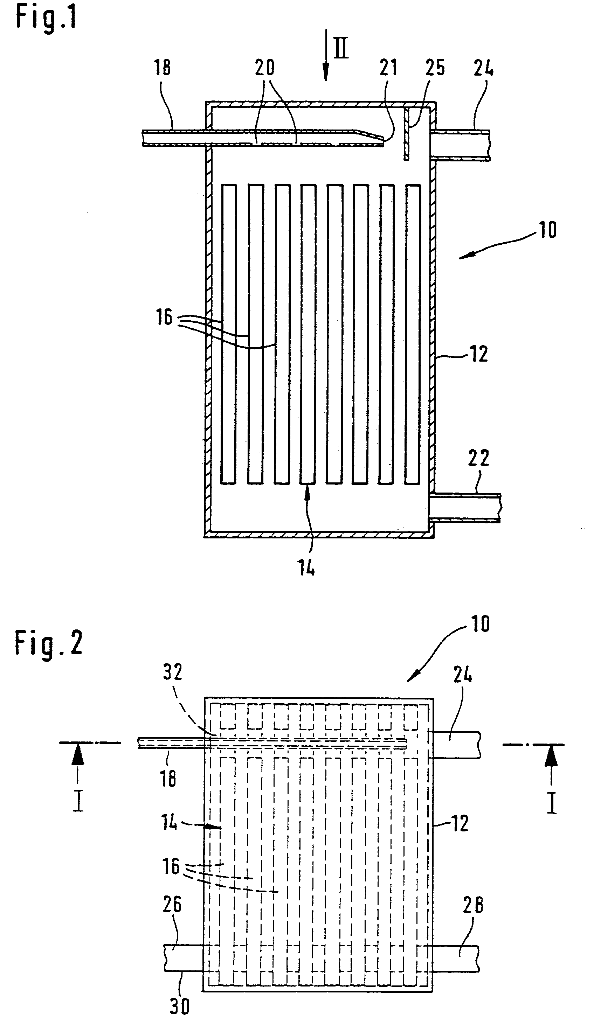

Die Figuren 1 und 2 zeigen ein erstes Ausführungsbeispiel einer erfindungsgemäßen Vorrichtung 10 zum Verdampfen und Überhitzen eines flüssigen Reaktant-Massenstromes, wobei die Darstellung der Figur 1 eine seitliche Schnittdarstellung gemäß der Schnittlinie I-I der Figur 2 und die Darstellung der Figur 2 eine durchsichtige Draufsicht gemäß dem Blickrichtungs-Pfeil II der Figur 1 ist.

Die erfindungsgemäße Vorrichtung 10 der Figuren 1 und 2 umfaßt ein Gehäuse 12, in dem eine Verdampfungs- und Überhitzungseinheit aus einem an sich bekannten Wärmetauscher 14 angeordnet ist. In dem dargestellten Ausführungsbeispiel ist der Wärmetauscher 14 ein aus mehreren parallel zueinander angeordneten Platten 16 bestehender Plattenwärmetauscher.

Oberhalb des Wärmetauschers 14 ist als Einrichtung zum feinverteilten Einsprühen des Reaktant-Massenstromes eine sich in das Gehäuse 12 hineinerstreckende Lanze 18 angeordnet. Die Lanze 18 ist im wesentlichen rohrförmig mit konisch zulaufender Spitze. Sie weist entlang ihrer Mantelfläche verteilt mehrere zu dem Wärmetauscher 14 weisende Austrittslöcher 20 auf. Die konisch zulaufende Spitze der Lanze 18 mündet gleichfalls in ein Austrittsloch 21.

Auf der der Lanze 18 diagonal gegenüberliegenden Seite des Wärmetauschers 14 (in der Darstellung der Figur 1 unten) ist ein Gasauslaß 22 für überhitztes Gas vorgesehen. An der der Lanze 18 gegenüberliegenden Wandung des Gehäuses 12 ist darüber hinaus ein Gaseinlaß 24 vorgesehen, der im wesentlichen konzentrisch zu der Lanze 18 verläuft und vor dem eine (in Figur 2 nicht dargestellte) Prallplatte 25 angeordnet ist.

Die erfindungsgemäße Vorrichtung 10 verfügt des weiteren über ein Rohr 30 zum Transport des Heizmediums für den Wärmetauscher 14, das aus Gründen der Übersichtlichkeit in der Darstellung der Figur 1 nicht dargestellt ist.

Die Lanze 18 ist in einem in dem Gehäuse 12 ausgebildeten Verteilerraum 32 angeordnet, der sich im wesentlichen konzentrisch zu der Lanze 18 erstreckt.

Im Betrieb der erfindungsgemäßen Vorrichtung 10 wird der Wärmetauscher 14 durch Zufuhr von Heizmedium durch eine Einlaßöffnung 26 des Rohres 30 aufgeheizt. Das Heizmedium tritt durch einen Auslaß 28 des Rohres 30 wieder aus und bildet vorteilhafterweise einen geschlossenen Kreislauf.

Über die Lanze 18 wird der flüssige Reaktant-Massenstrom in das Gehäuse 12 eingeleitet. Die Einleitung erfolgt durch die Austrittslöcher 20, 21 der Lanze 18 als feinverteiltes Einsprühen in den Verteilerraum 32, von dem aus eine Verteilung der Flüssigkeit in die durch den Wärmetauscher gebildete Verdampfungs- und Überhitzungszone erfolgt. Die zu verdampfende Flüssigkeit tritt erfindungsgemäß somit sprühnebelförmig aus den Austrittsöffnungen 20, 21 der Lanze 18 aus und verteilt sich gleichmäßig im Innern des Gehäuses 12.

Die feinen Flüssigkeitspartikel werden sehr schnell verdampft und es entsteht ein zum Gasauslaß 22 (der in der Darstellung der Figur 2 nicht sichtbar hinter dem Gaseinlaß 24 liegt) gerichteter schneller Dampfstrom. Flüssigkeitstropfen, die sich an kühleren Stellen des Wärmetauschers 14 bilden würden, werden von diesem Dampfstrom mitgerissen und gegen heiße Oberflächen des Wärmetauschers 14 geschleudert. Dadurch wird eine gute Tropfenfreiheit in dem Gehäuse 12 und somit ein hoher Wirkungsgrad des Wärmetauschers gewährleistet. Aufgrund der feinen Einsprühung der zu verdampfenden Flüssigkeit in die erfindungsgemäße Vorrichtung bildet sich in deren Innerem kein Flüssigkeitsspiegel, so daß die erfindungsgemäße Vorrichtung über eine hohe Dynamik verfügt.

Da die erfindungsgemäße Vorrichtung aufgrund ihres Aufbaus auch zur reinen Überhitzung eines bereits in der Gasphase vorliegenden Reaktanten geeignet ist, kann die erfindungsgemäße Vorrichtung wie in den Figuren 1 und 2 dargestellt zusätzlich einen Gaseinlaß 24 aufweisen. Im dargestellten Ausführungsbeispiel ist der Gaseinlaß 24 an der der Lanze 18 gegenüberliegenden Wandung des Gehäuses 12 angeordnet und erstreckt sich im wesentlichen konzentrisch zu der Lanze 18. Beabstandet zu der Mündung des Gaseinlasses 24 in das Gehäuse 12 ist eine Prallplatte 25 vorgesehen. Somit kommt der erfindungsgemäßen Vorrichtung eine Zusatzfunktion zu, da sowohl flüssige als auch gasförmige Reaktanten zugeleitet und in überhitzten Zustand versetzt werden können Das jeweils entstandene überhitzte Gas wird über den Gasauslaß 22 als gemeinsamen Auslaß abgeführt.

Der Gaseinlaß kann in Abwandlung des dargestellten Ausführungsbeispieles auch an derselben Wandung des Gehäuses 12 wie die Lanze 18 angeordnet sein. In diesem Falle bietet es sich an, die Lanze 18 im Innern des mit einem größeren Durchmesser ausgebildeten Gaseinlasses 24 zu führen. Obwohl es natürlich auch möglich ist, die für den flüssigen Reaktant-Massenstrom vorgesehene Einsprüh-Einrichtung zum Einleiten eines zu erhitzenden Gases zu verwenden, hat es sich als günstiger erwiesen, einen separaten Gaseinlaß mit größerem Durchmesser vorzusehen, da ansonsten das zugeführte Gas einen zu hohen Druckabfall erfahren würde.

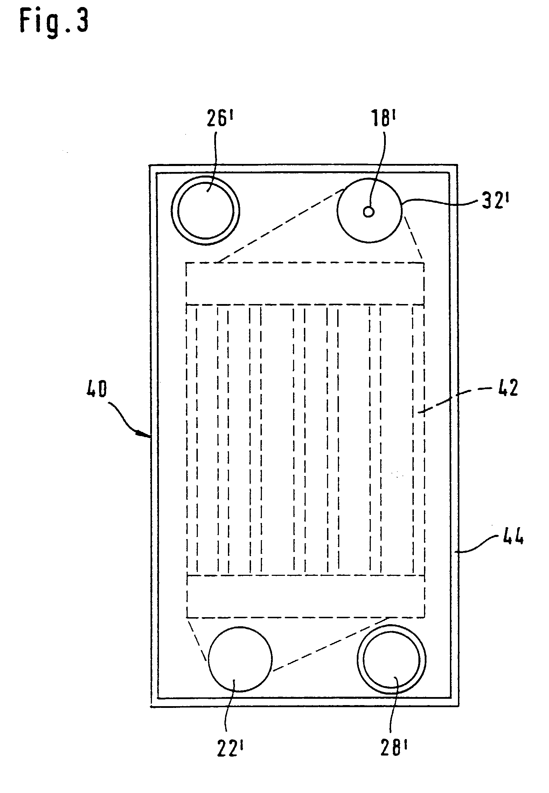

Das Gehäuse 12 der erfindungsgemäßen Vorrichtung 10 ist in der Praxis aus einer Mehrzahl von dicht abschließenden parallel aufeinandergelegten preßgeformten Blechplatten gebildet. Figur 3 zeigt eine derartige Gehäuseplatte 40 zum Aufbau eines zweiten Ausführungsbeispieles einer erfindungsgemäßen Vorrichtung.

Die Gehäuseplatte 40 ist eine Platte aus Blech, die in einem Preßwerk in eine eine Stütz- und Verteilerstruktur 42 aufweisende Form gepreßt wurde. Die Stütz- und Verteilerstruktur 42 ist in der Figur 3 gestrichelt eingezeichnet und dient zum einen zur Abstützung aufeinandergelegter Gehäuseplatten untereinander, zur Aufnahme und Stützung des Wärmetauschers sowie als unterstützende Verteilerstruktur für das zu verdampfende und/oder zu überhitzende Medium.

Die Gehäuseplatte 40 weist mehrere Durchbrüche 22', 26', 28', 32' auf. Im zusammengesetzten Zustand bei aufeinanderliegenden Gehäuseplatten liegen jeweils mehrere dieser Durchbrüche 22', 26', 28' bzw. 32' übereinander und bilden dadurch Hohlräume, die als Zuführungen bzw. als Aufnahmen von Zuführungen für den Gasauslaß 22, den Einlaß 26 bzw. den Auslaß 28 für das Heizmedium oder als Verteilerraum 32 dienen. Mit dem Bezugszeichen 18' ist die Lage der Einspritzlanze bezeichnet. Die Gehäuseplatte 40 weist des weiteren einen mit einer Dichtlippe 44 versehenen Rand auf, so daß eine gute Abdichtung aufeinandergelegter Gehäuseplatten möglich ist.

Selbstverständlich ist die Erfindung nicht auf die beschriebenen Ausführungsbeispiele beschränkt. Vielmehr ist der Fachmann in der Lage, weitere den Erfindungsgedanken verwirklichende Ausgestaltungen zu schaffen. So ist es beispielsweise möglich, anstatt eines Plattenwärmetauschers andere an sich bekannte Wärmetauscher zu verwenden, wie beispielsweise einen Rohrwärmetauscher. Des weiteren muß der Gasauslaß nicht notwendigerweise unterhalb des Wärmetauschers angeordnet sein, sondern kann auch in anderen strömungsgünstigen Bereichen des Gehäuses der Vorrichtung angeordnet sein. Um einen besonders breiten Dynamikbereich der Verdampferleistung zu erzielen, können mehrere in dem Gehäuse verteilt angeordnete Einsprüh-Einrichtungen vorgesehen werden.

Erfindungsgemäß wird somit ein Verdampfer-/Überhitzer-System bereitgestellt, die in einem einzigen Bauteil drei Funktionen, nämlich die eines Verdampfers, eines Überhitzers und eines Gas-Erhitzers wahrnimmt. Die erfindungsgemäße Vorrichtung ist aufgrund ihres Aufbaues unempfindlich bei Verwendung verschmutzter Treibstoffe und verfügt über eine hohe Dynamik, da bei Lastwechseln in der flüssigen Phase keine Volumenänderungen auftreten. Die erfindungsgemäße Vorrichtung eignet sich vorteilhafterweise zur Verwendung in einem integrierten Gaserzeugungssystem für Brennstoffzellen für mobile Anwendungen, wobei es zur Verwendung in einem modularen Aufbau geeignet ist.

## Patentansprüche

1. Vorrichtung zum Verdampfen und Überhitzen eines flüssigen Reaktant-Massenstroms mit einem Gehäuse (12), in dem eine Verdampfungs- und Überhitzungseinheit aus einem an sich bekannten Wärmetauscher (14), mindestens eine Einrichtung zum feinverteilten Einsprühen des Reaktant-Massenstromes und ein Gasauslaß (22) für überhitztes Gas vorgesehen sind.

2. Vorrichtung nach Anspruch 1, bei der die mindestens eine Einrichtung zum feinverteilten Einsprühen als in das Gehäuse ragende Lanze (18) ausgebildet ist.

3. Vorrichtung nach Anspruch 2, bei der die Lanze (18) mehrere Austrittslöcher (20, 21) aufweist.

4. Vorrichtung nach einem der Ansprüche 1 bis 3, bei der die mindestens eine Einrichtung zum feinverteilten Einsprühen in einem in dem Gehäuse ausgebildeten Verteilerraum (32) angeordnet ist.

5. Vorrichtung nach einem der Ansprüche 1 bis 4, bei der ein Gaseinlaß (24) für zu überhitzendes Gas vorgesehen ist.

6. Vorrichtung nach Anspruch 5, bei der die Einrichtung zum feinverteilten Einsprühen in dem Gaseinlaß (24) integriert ist.

7. Vorrichtung nach Anspruch 5 oder 6, bei der der Strömungsdurchmesser der Einrichtung zum feinverteilten Einsprühen kleiner ist als der Strömungsdurchmesser des Gaseinlasses (24).

8. Vorrichtung nach einem der vorstehenden Ansprüche, bei der der Wärmetauscher (14) ein Plattenwärmetauscher ist.

9. Vorrichtung nach Anspruch 8, bei der Gaszufuhr und -abfuhr durch jeweils an den Plattenenden vorgesehene Strömungskanäle erfolgt.
